# EUROPEAN PATENT SPECIFICATION

(11) **EP 3 369 902 B1**
(45) Date of publication and mention of the grant of the patent: **22.04.2020**
(21) Application number: 17305232.5
(22) Date of filing: 03.03.2017
(51) Int. Cl.: F01N 3/20, F01N 11/00

(54) **METHOD AND SYSTEM FOR DETERMINING THE VALIDITY OF A MEASURED CONCENTRATION OF UREA IN A FLUID**
VERFAHREN UND SYSTEM ZUR BESTIMMUNG DER GÜLTIGKEIT EINER GEMESSENEN KONZENTRATION VON HARNSTOFF IN EINEM FLUID
PROCÉDÉ ET SYSTÈME PERMETTANT DE DÉTERMINER LA VALIDITÉ D'UNE CONCENTRATION D'URÉE MESURÉE DANS UN FLUIDE

(43) Date of publication of application: 05.09.2018
(73) Proprietor: MEAS France, 31027 Toulouse Cedex 3 (FR)
(72) Inventor: TOULON-MEEKHUN, Dariga, 31520 Ramonville (FR); FOUGERE, Tom, 31300 Toulouse (FR); MILPIED, Jean, 31300 Toulouse (FR); GAUNARD, Florent, 31400 Toulouse (FR)
(74) Representative: Grünecker Patent- und Rechtsanwälte PartG mbB

(56) References cited:
- EP-A1- 1 752 762
- WO-A1-2009/008408
- WO-A2-2007/104779
- FR-A1- 2 972 489
- JP-A- 2008 248 710
- US-A1- 2011 107 812

## Description

### Field of the invention

The present application relates to methods and systems for determining the validity of a measured concentration of urea in a fluid. In particular, the application relates to methods and systems for determining the validity of a concentration of urea measured by a urea quality sensor immersed in a urea solution.

### Background of the invention

In the automotive industry, it is known to use urea solutions, namely solutions comprising urea mixed with one or more other fluids, in Selective Catalytic Reduction (SCR) systems to reduce nitrous oxide (NOx) gases in the exhaust of diesel engines. A particular example of urea solution, known as diesel exhaust fluid (DEF), is an aqueous solution of 32.5 % of automotive grade urea and 67.5 % of deionized water. These solutions need to be in their liquid phase to be injected into the SCR systems and perform the NOx reduction efficiently. The particular 32.5 % urea concentration is generally preferred as it provides the lowest freezing point of the DEF solution while providing the required NOx reduction properties. Thus, catalytic reduction systems are usually calibrated to this concentration, so that NOx is reduced in the desired amounts.

Therefore, the concentration level of urea in urea solutions, for instance in DEF, typically needs to be measured and monitored in order to provide an indication of the quality of the solution injected in the SCR system. In this respect, it is commonly known to use different types of fluid property sensors as urea quality sensors for measuring the concentration of urea in urea solutions such as DEF, for instance, based on optical, in particular Near Infra-Red (NIR), technology or on ultrasonic measurements. Furthermore, in known systems like in US 2011/0107812 A1, a urea concentration (or quality) sensor and a temperature sensor are usually immersed in a dedicated tank filled with a urea solution or, more generally, a fluid comprising urea. Both sensors output respective measurements of the fluid temperature and concentration of urea in the fluid to a customer system, such as a vehicle onboard computer, an electronic control unit, or the like.

Furthermore, in DEF, which has the preferred urea concentration of 32.5 %, both the urea and water will freeze or thaw essentially at the same rate, respectively. If the urea solution freezes, the SCR systems are generally designed to provide heating to return the urea solution, in this case DEF, to its liquid phase. Notwithstanding this, if the urea solution freezes, the urea concentration sensor will then be immersed in the frozen urea solution.

A problem that has been observed close to the freezing phase and close to the thawing phase of urea solutions, in particular in the case of DEF, is that the immersed urea concentration sensor, which is then not necessarily in its ideal operating conditions, outputs values of measured urea concentrations of what is interpreted as liquid urea by the system although these measured urea concentrations are in fact erroneous as the fluid or urea solution is at least partially frozen, or is even completely frozen. Accordingly, wrong information is sent to the user system (vehicle onboard computer, electronic control unit, or the like). In other words, already in the vicinity of freezing or thawing conditions, a problem is that urea concentration sensors can output concentration values which are interpreted as concentrations of liquid urea although these values should not be possible, as they correspond to values that can exist only when urea is in a different physical phase. It is then not possible to distinguish whether this situation arises because the urea is in the solid phase rather than in the liquid phase, or whether the sensor is defective. Accordingly, there is a risk that a concentration value of liquid urea having no sense with respect to its current physical phase will be output to the customer system, whereby incorrect adjustments of the SCR system could be triggered. In particular, there is also a risk that the SCR system will try using a partially or even totally frozen urea solution.

Thus, in the automotive industry and especially in the context of SCR systems, there is a need for urea concentration or quality sensors and related methods which can deliver a valid measured concentration of urea at a given temperature while overcoming the above-mentioned problems. In other words, there is a need for methods and systems for determining the validity of a measured urea concentration in urea solutions, such as DEF, or more generally in fluids comprising urea, in particular close to or during the freezing or thawing phases, or more in general close to conditions under which a change of phase is initiated.

### Description of the invention

The above-mentioned problem is solved by a method according to claim 1, as well as by a system according to claim 5.

Optional features of the method and system according to the invention are described in the dependent claims and will also be explained hereafter.

According to the present invention, a method for determining the validity of a measured concentration of urea in a fluid comprises measuring a temperature of a fluid comprising urea, and measuring a concentration of urea in said fluid. The method of the present invention further comprises, after measuring the temperature, determining an interval of validity of a concentration of urea in said fluid for a given predetermined physical phase of the fluid at the measured temperature, and determining whether the measured concentration of urea falls in the determined interval of validity for said predetermined physical phase.

The inventive method is particularly advantageous when only concentrations of urea in a given predetermined physical phase (solid, liquid, gas...) should be considered relevant. For instance, close to conditions under which a change of phase of urea and/or of the fluid can be initiated, or even during a change of phase, the inventive method can be used to prevent sending values of measured concentrations of urea which would be representative of a physical phase different than the predetermined physical phase. For instance, in the automotive industry, and in particular in SCR systems which require urea solutions in the liquid phase, the inventive method can be used to ensure that only valid concentrations of urea are sent to the user system (vehicle onboard computer, electronic control unit, or the like).

According to the invention, determining the interval of validity of the concentration of urea comprises using phase diagram information for the fluid. Thus, the present invention can be used to confirm whether the current physical phase of urea in the fluid is the desired predetermined physical phase.

In further preferred embodiments, after determining whether the measured concentration of urea falls in the determined interval of validity for said predetermined physical phase, the method can further comprise classifying as invalid a measured concentration of urea that was determined as not falling in the interval of validity, and/or classifying as valid a measured concentration of urea that was determined as falling in the interval of validity. This has the advantage that invalid measurements can be disregarded or discarded.

In further preferred embodiments, the method can also comprise outputting the measured temperature and/or outputting the measured concentration of urea and/or, after determining whether the measured concentration of urea falls in the determined interval of validity for said predetermined physical phase, outputting information representative of the validity or invalidity of the measured concentration of urea for the predetermined physical phase.

Advantageously, outputting information representative of the validity or invalidity of the measured concentration of urea can comprise outputting information representative of an actual current physical phase of the fluid, in particular information as to whether the current physical phase of the fluid is the predetermined physical phase.

According to the invention, the predetermined physical phase is the liquid phase. The method can then be used advantageously for validating a measured concentration of a liquid substance close to conditions under which a change of phase is initiated, in this particular case close to or even during a freezing or a thawing phase of the fluid.

According to the invention, the fluid is a urea solution comprising deionized water, in particular diesel exhaust fluid (DEF). The method can then be used advantageously to characterize a measured concentration of urea in this type of urea solutions, in particular in urea solutions used in relation to a diesel engine, and in particular in a Selective Catalytic Reduction (SCR) system of a diesel engine.

According to the invention, determining an interval of validity comprises using a phase diagram for said urea solution, in particular a DEF phase diagram, comprising information regarding the concentration of urea at a given temperature in the solid and liquid phases. The method can then be used for validating a measured concentration of liquid urea close to conditions leading to a freezing or a thawing phase of the urea solution, and even during the freezing or the thawing phase.

According to the present invention, a system for determining the validity of a measured concentration of urea in a fluid comprises temperature sensing means arranged and configured for measuring a temperature of a fluid comprising urea, and further configured to output the measured temperature, and concentration sensing means arranged and configured for measuring a concentration of urea in said fluid, and further configured to output the measured concentration of urea. The system of the present invention further comprises processing means configured for reading the measured temperature output from the temperature sensing means, determining an interval of validity of a concentration of urea in said fluid for a given predetermined physical phase of the fluid at the measured temperature, and determining whether the measured concentration of urea output from the concentration sensing means falls in the determined interval of validity for said predetermined physical phase.

The inventive system is particularly advantageous when only concentrations of urea in a given predetermined physical phase (solid, liquid, gas...) should be considered relevant. For instance, close to conditions under which a change of phase of urea and/or of the fluid can be initiated, or even during a change of phase, the inventive system can be used to prevent sending values of measured concentrations of urea which would be representative of a physical phase different than the predetermined physical phase. For instance, in the automotive industry, and in particular in SCR systems which require urea solutions in the liquid phase, the inventive system can be used to ensure that only valid concentrations of urea are sent to the user system (vehicle onboard computer, electronic control unit, or the like).

According to the invention, the system comprises storage means configured for storing information accessible by the processing means relative to the physical phase of the fluid according to temperature and concentration of urea in the fluid, in particular wherein the information is stored as a look-up table and/or as a function. Thus, the present invention can be used to confirm whether the current physical phase of urea is the desired predetermined physical phase. In some variants, it would be possible to store information relative to different types of phase diagrams, and/or phase diagram information relative to various substances and/or fluids comprising urea.

In further preferred embodiments, based on a result of the determination of whether the measured concentration of urea falls in the determined interval of validity for said predetermined physical phase, the processing means of the system can be further configured for classifying as invalid a measured concentration of urea that was determined as not falling in the interval of validity, and/or classifying as valid a measured concentration of urea that was determined as falling in the interval of validity.

In further preferred embodiments, the processing means of the system can be further configured for outputting information representative of the validity or invalidity of the measured concentration of urea for the predetermined physical phase.

Advantageously, the information representative of the validity of the measured concentration of urea can comprise information representative of an actual current physical phase of the fluid, in particular information as to whether an actual current physical phase of the fluid is the predetermined physical phase.

In variants of preferred embodiments, based on a result of the determination by the processing means of whether the measured concentration of urea falls in the determined interval of validity for said predetermined physical phase, the processing means can be further configured to output information for adjusting the concentration sensing means. Thus, the system could trigger or activate compensations and/or adjustments of the measured concentration values output by the concentration sensing means.

In further variants, based on a result of the determination by the processing means of whether the measured concentration of urea falls in the determined interval of validity for said predetermined physical phase, the processing means can be further configured to output information relative to the nature and/or composition of the fluid. This is advantageous, for instance, in case where the fluid is determined to be indeed in the predetermined physical phase (for instance by additional control means), but the measured concentration of urea still falls outside of the validity range, as this could be an indicator that the nature and/or composition of the fluid in use is incorrect. For instance, this could be useful to verify that a desired urea solution is indeed being used in a diesel engine system.

According to the invention, the processing is configured such that the predetermined physical phase is the liquid phase. The system can then be used advantageously for validating a measured concentration of a liquid substance close to conditions under which a change of phase is initiated, in this case close to or even during a freezing or a thawing phase of the fluid. The predetermined physical phase is not limited to the liquid phase and, in further variants, it could be any other desired phase, for instance the solid phase, the gaseous phase, or even a plasma phase, as may be applicable and/or necessary depending on operation conditions.

According to the invention, the fluid is a urea solution comprising deionized water, in particular diesel exhaust fluid (DEF). The system can then be used advantageously to characterize a measured concentration of urea in this type of urea solutions, in particular in urea solutions used in relation to a diesel engine, and in particular in a Selective Catalytic Reduction (SCR) system of a diesel engine.

According to the invention, the system further comprises storage means configured for storing phase diagram information accessible by the processing means in respect of said urea solution, in particular a DEF phase diagram, wherein said phase diagram information comprises information regarding the concentration of urea at a given temperature in the solid and liquid phases of said urea solution, more in particular wherein said phase diagram information is stored as a look-up table and/or as a function. The system can then be used for validating a measured concentration of liquid urea close to conditions leading to a freezing or a thawing phase of the urea solution, and even during the freezing or the thawing phase.

Advantageously, the system can then be used in combination with a diesel engine, in particular in a Selective Catalytic Reduction (SCR) system of a diesel engine.

While providing a solution for the above-mentioned technical problem, the present invention is not limited to the particular determination of the validity of a measured concentration of liquid urea in DEF solutions used in SCR systems of diesel engines. More generally, the present invention provides a method and a system for determining the validity of a measured concentration of urea in a fluid, which can be used, for instance, in conditions leading to a possible change of phase, or even during a change of phase, of the fluid in order to determine whether the fluid is in the physical phase in which the measured concentration makes sense.

### List of Figures

The invention will be described more in detail hereafter, based on advantageous embodiments described in combination with the following figures:
- FIG. 1: is a bloc diagram illustrating an example of an inventive method for determining the validity of a measured concentration of urea in a fluid according to the present invention;
- FIG. 2: is a bloc diagram detailing steps of an embodiment of the method illustrated in FIG. 1;
- FIG. 3: schematically illustrates an example of a device for determining the validity of a measured concentration of urea in a fluid according to the present invention; and
- FIG. 4: is a phase diagram of urea usable for implementing the present invention in a urea quality sensor for a urea solution such as diesel exhaust fluid.

### Description of embodiments

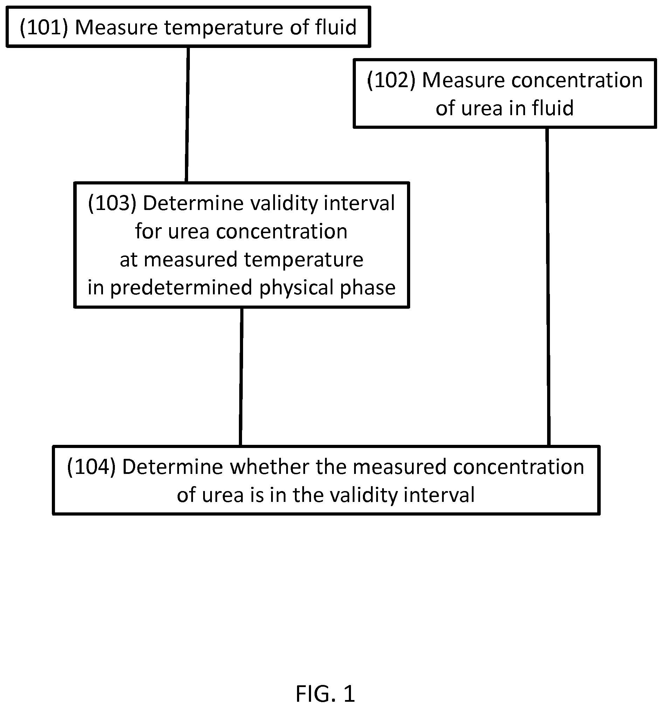

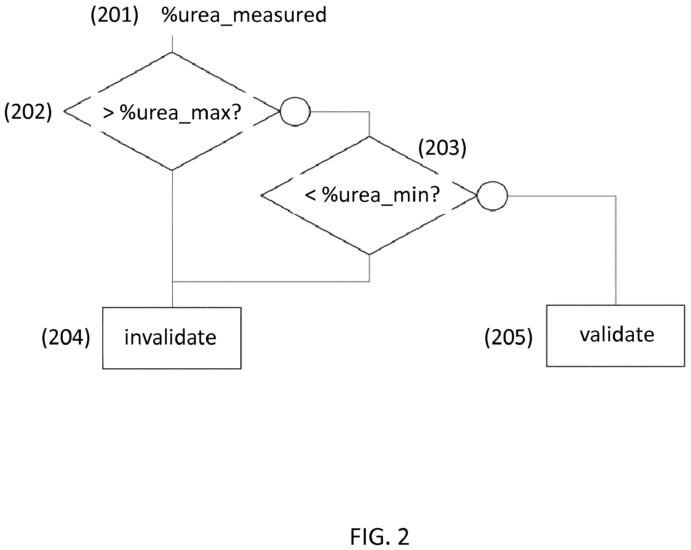

The general principle of the method according to the present invention will first be explained in combination with the embodiments illustrated in FIGS. 1 and 2.

As can be taken from the block diagram of FIG. 1, according to an aspect of the present invention, a method for determining the validity of a measured concentration of urea contained in a fluid can comprise a step 101 of measuring the temperature of the fluid comprising urea. The method can also comprise a step 102 of measuring a concentration of urea within the fluid. Preferably, these two measurements can be realized essentially simultaneously, or at least close enough in time, such that the measured concentration of urea can be output essentially as a function of the measured temperature.

Furthermore, as illustrated in FIG. 1, the method can further comprise a step 103 of determining an interval of concentrations for which at least urea, in particular the fluid comprising urea, can exist in a desired predetermined physical phase (solid, liquid, gas...) at the temperature measured in step 101 (in the following, this interval of urea concentrations may also be referred to as "validity interval" or analog expressions). Since this step 103 depends on the measured temperature, it is carried out after the temperature measurement step 101. In some embodiments, step 103 could be achieved by means of using phase diagram information for the fluid, in particular comprising information regarding one or more phase boundaries for the fluid based on the concentration of urea within the fluid and on temperature.

Then, as also shown in FIG. 1, the method can comprise a step 104 of determining whether the concentration of urea measured in step 102 falls within the interval of valid concentrations for the predetermined physical phase determined in step 103. Optionally, step 104 or subsequent steps could comprise classifying the urea concentration measured in step 102 as a valid concentration of urea in the predetermined physical phase if it falls within the interval of valid concentrations determined in step 103, or as an invalid concentration of urea in said predetermined physical phase if it falls outside of the interval of valid concentrations determined in step 103. Also optionally, this information could be output to be used by other processes.

Further optional steps could include outputting the temperature measured in step 101 and/or the concentration of urea measured in step 102. For the latter, the method could optionally comprise outputting the concentration of urea measured in step 102 together with information representative of its validity or invalidity in the predetermined physical phase following the result of the determination in step 104. For instance, in some embodiments, the method illustrated in FIG. 1 could comprise, based on the result of the determination in step 104, outputting information confirming whether urea, in particular the fluid comprising urea, is in the predetermined physical phase corresponding to the validity range determining in step 103 (valid measurement), or whether it is in a different physical phase (invalid measurement).

Thus, the method of the present invention can be used to confirm whether the current physical phase of urea, in particular of the fluid comprising urea, is the predetermined physical phase in which a measured concentration of urea falling within the validity interval determined in step 103 makes sense from a physical/chemical point of view.

One way to realize step 104 of determining whether the urea concentration measured in step 102 falls within the interval of concentrations determined in step 103 is illustrated in the block diagram of FIG. 2 representing an example of an implementation of a possible validation algorithm.

In this embodiment, after a temperature has been measured, for instance like in step 101 of the embodiment illustrated in FIG. 1, a validity interval of urea concentration(s) is determined, for instance like in step 103, which is a range of concentrations of urea in the fluid for which urea, in particular the fluid comprising urea, can exist in a desired predetermined physical phase. As can be taken from FIG. 2, in this embodiment, at a given measured temperature, it was determined that the substance of which the concentration is measured within the fluid, namely urea, can exist in a given predetermined physical phase when its concentration falls within a minimum concentration, %urea_min, and a maximum concentration, %urea_max.

As illustrated in FIG. 2, at a step 201, which can correspond essentially to the step 102 of the embodiment illustrated in FIG. 1, for the measured temperature, a concentration of urea in the fluid, %urea_measured, was also measured.

As illustrated in step 202, the measured concentration of urea, %urea_measured, is compared to the maximum concentration, %urea_max, of the validity interval. Based on the result of this comparison, if the measured concentration of urea is greater than the maximum concentration of the validity interval, %urea_measured > %urea_max, the measured concentration of urea, %urea_measured, is then invalidated, as illustrated in step 204.

However, still based on the result of the comparison illustrated in step 202, if the measured concentration of urea is smaller than the maximum concentration of the validity interval, %urea_measured < %urea_max, the measured concentration of urea, %urea_measured, is then compared to the minimum concentration, %urea_min, of the validity interval, as can be seen in step 203.

Then, as illustrated in step 203, if the measured concentration of urea is smaller than the maximum concentration of the validity interval, %urea_measured < %urea_max, and is also smaller than the minimum concentration of the validity interval, %urea_measured < %urea_min, the measured concentration of urea, %urea_measured, is then invalidated, as illustrated in step 204.

Alternatively, as can also be seen in step 203, if the measured concentration of urea is smaller than the maximum concentration of the validity interval, %urea_measured < %urea_max, and is greater than the minimum concentration of the validity interval, %urea_measured > %urea_min, in other words if the measured concentration of urea falls within the validity interval, %urea_min < %urea_measured < %urea_max, the measured concentration of urea, %urea_measured, is then validated, as illustrated in step 205.

It should be noted that the embodiment illustrated in FIG. 2 should not be considered to represent the only manner of implementing the determination step 104. For instance the order of steps 202 and 203 could be inverted, and the output could differ from a simple validation or invalidation as illustrated in steps 204 and 205 of FIG. 2.

In any case, as can be taken from the embodiment illustrated in FIG. 2, measured concentrations of urea in the fluid, %urea_measured, falling outside of the validity interval [%urea_min; %urea_max] would indicate that urea, in particular the fluid comprising urea, is in fact not in the desired predetermined physical phase at a measured temperature. By way of example and in a non-limitative manner, the invention could be used to validate measured concentrations of urea in the fluid, %urea_measured, that would only make sense or be usable when urea and/or the fluid are in the liquid phase at the measured temperature. The present invention is, however, not limited to validating concentrations of urea in a liquid phase and could be used for validating concentrations in any other physical phase (solid, gas...).

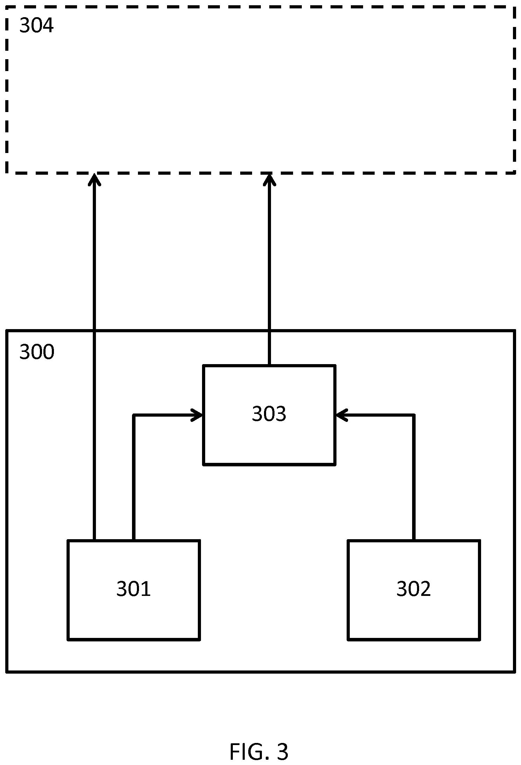

Next, the general principle of the device according to the present invention will be explained in combination with the embodiment illustrated in FIG. 3.

As can be taken from FIG. 3, according to another aspect of the present invention, a system 300 for determining the validity of a measured concentration of urea contained in a fluid can comprise a temperature sensor 301 and a concentration sensor 302, which can be arranged and configured so as to measure the temperature of the fluid and a concentration of urea in the fluid, respectively, and output the measured values. For instance, the temperature sensor 301 and/or the concentration sensor 302 could be at least partially immersed in or in contact with the fluid. Preferably, these two measurements can be realized essentially simultaneously, or at least close enough in time, such that the urea concentration measured by the concentration sensor 302 can be output essentially as a function of the temperature measured by the temperature sensor 301.

Furthermore, as also illustrated in FIG. 3, the system 300 can comprise a processing unit 303 configured to read outputs of the temperature sensor 301 and of the concentration sensor 302. Furthermore, the processing unit 303 can be configured, in particular programmed, for determining and interval of urea concentrations for which at least urea, in particular the fluid comprising urea, can exist in a desired predetermined physical phase (solid, liquid, gas...) at a given temperature (in the following, this interval of concentrations may also be referred to as "validity interval" or analog expressions). Thus, upon reading a temperature measured by the temperature sensor 301, the processing unit 303 can determine an interval of concentrations of urea which can be correlated to a desired predetermined physical phase of urea, in particular of the fluid comprising urea. In some embodiments, the processing unit 303 could perform the determination using available phase diagram information for the fluid, in particular comprising information regarding one or more phase boundaries for the fluid based on the concentration of urea within the fluid and on temperature, which could be stored in an optional storage unit of the system 300, for instance as a look-up table and/or as a function or the like, accessible by the processing unit 303. The storage unit could be provided as a separate component of the system 300 or integrally with the processing unit 303.

Furthermore, in the embodiment illustrated in FIG. 3, the processing unit 303 can also be configured, in particular programmed, for determining whether a given concentration of urea falls within the determined validity interval representative of the desired predetermined physical phase. Thus, upon reading the urea concentration measured by the concentration sensor 302 and reading the temperature measured by the temperature sensor 301, the processing unit 303 can determine the validity interval for this temperature, and determine whether the measured concentration of urea falls within the determined validity interval.

Optionally, the processing unit 303 can output validity or invalidity information representative of the result of this determination. For instance, depending on user requirements, the processing unit 303 could be configured to output a valid, respectively invalid, classification when the urea concentration measured by the concentration sensor 302 is determined as falling, respectively as not falling, within the corresponding validity interval determined for the temperature measured by the temperature sensor 301. Still optionally, the processing unit 303 could be configured for outputting information representative of the validity or invalidity of the measured concentration of urea for the predetermined physical phase (solid, liquid, gas...) of urea in the fluid. Thus, the processing unit 303 could be configured for outputting information confirming whether the actual current physical phase of urea, in particular of the fluid comprising urea, corresponds to the predetermined physical phase or to a different physical phase.

Furthermore, also depending on user requirements, the processing unit 303 and/or other optional units of the system 300 could be configured to process the above-mentioned outputs. In some embodiments, the system 300 could output the results of the determination towards a customer system 304. In some embodiments, the temperature measured by the temperature sensor 301 could also be an output of the system 300.

In any case, the system 300 of the embodiment illustrated in FIG. 3 can be used to confirm whether the urea concentration measured by the concentration sensor 302 at the temperature measured by the temperature sensor 301 corresponds to a valid urea concentration that can be measured assuming that urea, in particular the fluid comprising urea, is in said given predetermined physical phase. In yet other words, the system 300 can be used to confirm whether urea, in particular the fluid comprising urea, is indeed in said given predetermined physical phase and, as the case may be, whether the urea concentration measured by the concentration sensor 302 is usable or should be discarded because it is representative of a different physical phase of urea, or more in general of the fluid comprising urea.

Furthermore, optionally, based on the result of the determination by the processing unit 303 of whether the urea concentration measured by the concentration sensor 302 is valid or invalid in the desired predetermined physical phase at the temperature measure by the temperature sensor 301, the processing unit 303 could be configured for outputting information usable for adjusting and/or calibrating the concentration sensor 302. In particular, the processing unit 303, or more in general the system 300, could be configured for activating a compensation and/or a (re)adjustment and/or a (re)calibration of the concentration sensor 302.

Also optionally, depending on the validity or invalidity of the urea concentration measured by the concentration sensor 302, as determined by the processing unit 303, the processing unit 303, or the system 300 in general, could be configured to determine whether the nature and/or composition of the fluid is as expected. For instance, a situation could arise in which the fluid in which a concentration of urea is measured by the system 300, in particular by the concentration sensor 302, is known to be in the desired predetermined physical phase (this could be achieved by other sensing means, visual control, or any other means), but the concentration of urea measured by the concentration sensor 302 still falls outside of the validity range determined by the processing unit 303. The system 300, in particular an output of the processing unit 303, could then be used as an indicator that the nature and/or composition of the fluid in use is, in fact, not the as expected. For instance, this could be useful to ensure that a desired urea solution is indeed being used in a diesel engine system. Should the situation above arise, an output of the processing unit 303 could be indicative that the fluid being used is, in fact, not the desired urea solution.

In some embodiments, the processing unit 303 could therefore be configured to carry out the method of the present invention. For instance, in some embodiments, the processing unit 303 could be programmed for performing the steps of the method illustrated in FIG. 1. In particular, the processing unit 303 could be programmed for determining the validity of a concentration of urea measured by the concentration sensor 302 at the temperature measured by the temperature sensor 301 using the method and algorithm illustrated in FIG. 2.

In the particular case of urea solutions comprising deionized water, such as diesel exhaust fluid (DEF), which are used in diesel engines, in known urea quality sensors, the measured temperature and urea concentration are output to the customer system (SCR system, onboard computer, etc.) without being correlated to the current physical phase of the DEF solution. Thus, close to the conditions of a change of phase, and in particular during a change of phase, more in particular close to or even during a freezing or a thawing phase of the urea solution, for instance DEF, known SCR systems, which require urea or, more in general, the urea solution to be in the liquid state, can receive measured concentrations of urea which are interpreted by the system as being concentrations of urea in the liquid phase although the urea solution, and therefore the urea, is in fact at least partially, or even completely, in the solid phase. As mentioned above, this particular problem is also solved by the present invention, as will be detailed hereafter.

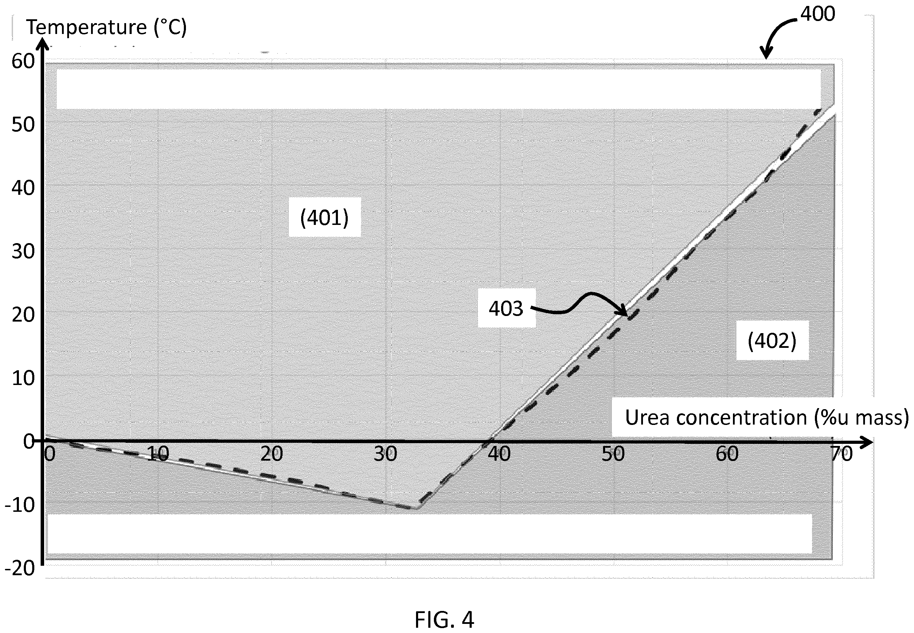

FIG. 4 illustrates an example of a phase diagram 400 of a urea solution comprising deionized water, here in particular a phase diagram of diesel exhaust fluid (DEF), usable with the present invention, representing urea concentration in percent by weight (% per unit mass) of the urea solution, for example DEF in this example, as a function of temperature (°C). The upper region 401 of the diagram 400 represents the conditions in which the urea solution, in this example DEF, and therefore also the urea contained therein, is in the liquid phase, while the lower region 402 represents the conditions in which the urea solution, and therefore of the urea contained therein, is in the solid phase. A dotted line 403 represents the phase boundary where the transition between the liquid and solid phases of the urea solution, and therefore of the urea contained therein, occurs. The phase boundary 403 can be determined using well-known theoretical and/or empirical methods.

In the following, by way of example and in a non-limitative manner, it will be assumed that a user requirement is that a urea solution is only usable in its liquid phase. Accordingly, at a given temperature, concentrations of urea representative of the solid phase should be invalidated. The present invention, however, is not limited only to validating concentrations of urea contained in a fluid in the liquid phase or to the particular case of urea concentrations in urea solutions comprising deionized water, such as DEF.

Using the phase diagram 400 illustrated in FIG. 4, at a given temperature, a minimum and maximum urea concentration in the liquid phase can be determined using the phase boundary 403. In an implementation of the embodiments of the present invention illustrated in FIGS. 1, 2, and 3, this would correspond to the determination of the %urea_min and %urea_max values in step 103, respectively, which could be carried out by the processing unit 303, based on the temperature measured in step 101, which could be measured by the temperature sensor 301 as explained above.

Outside of this determined [%urea_min; %urea_max] range, or more generally outside of region 401 on the diagram 400, urea and deionized water cannot be in the liquid phase.

Accordingly, outside of this determined [%urea_min; %urea_max] range, urea concentration sensors would not be performing measurements in the liquid phase but rather in the solid phase, namely in region 402, which is the physical phase of less interest in this particular example, as explained above. In implementations of the embodiments illustrated in FIGS. 1, 2, and 3, a urea concentration measured in step 102, which could be carried out by the concentration sensor 302 of the system 300, could then be tested against the determined [%urea_min; %urea_max] range following the logic illustrated in FIG. 2, which could be implemented by the processing unit 303 in the system 300. A measured urea concentration falling in the determined [%urea_min; %urea_max] range could be flagged accordingly, in particular it could be validated, and a measured urea concentration falling outside of the determined [%urea_min; %urea_max] could be flagged accordingly, in particular it could be invalidated.

In some embodiments, the system 300 could therefore be adapted for SCR systems used with diesel engines. Thus, the concentration sensor 302 could be a urea concentration sensor, using for instance optical technology (NIR urea concentration sensor or the like) or ultrasonic measurements, which could be used in combination with the phase diagram 400. In turn, the phase diagram 400 could be stored in an optional storage unit of the system 300, for instance as a look-up table and/or as a function, or the like, accessible by the processing unit 303. The storage unit could be provided as a separate component of the system 300, or integrally with the processing unit 303. As explained above, the system 300 could then output information relative to the validity or invalidity of the measured urea concentration towards a customer system 304, for instance onboard processing means (for instance, SCR system, onboard computer, electronic control unit, or the like) of a diesel engine vehicle. In this manner, especially when approaching freezing or thawing conditions, or even during a freezing or thawing phase of the urea solution, the present invention could prevent the customer system 304 from receiving a measured urea concentration representative of the solid phase, and thereby prevent erroneous or unnecessary adjustments of the SCR system.

Examples of invalid measurements which could be indentified with implementations of the present invention will be given hereafter in the context of freezing or thawing phases of a DEF solution.

In a first example, a urea concentration sensor using optical, in particular Near Infra-Red (NIR), technology is used to implement the concentration sensor 302. During a freezing phase, for a temperature of -10 °C measured by the temperature sensor 301, the values %urea_min = 30 % per unit mass and %urea_max = 33.75 % per unit mass can be determined using the phase diagram 400. For various measurements carried out at this first temperature, the concentration sensor 302 returned urea concentration values ranging from 26.75 to 29 % per unit mass. Thus, as explained above, the system 300 can invalidate these measurements, as the measured concentrations do not correspond to concentrations of urea that are physically possible in the liquid phase.

In a second example, using the same system as in the first example, and therefore still in the freezing phase, for a temperature of -11 °C measured by the temperature sensor 301, using the DEF phase diagram 400, it can be determined that %urea_min = %urea_max = 32.5 % per unit mass. Here, for various measurements carried out at this second temperature, the concentration sensor 302 returned urea concentration values ranging from 28.75 to 16.5 % per unit mass. Here again, the system 300 can invalidate these measurements.

In a third example, a urea concentration sensor using ultrasonic measurements is used to implement the concentration sensor 302. In this example, measurements were carried out during a thawing phase. For a temperature of -7 °C measured by the temperature sensor 301, %urea_min = 22.5 % per unit mass and %urea_max = 35 % per unit mass can be determined using the DEF phase diagram 400. At this third temperature, a measurement performed by the concentration sensor 302 returned a urea concentration value or 38.25 % per unit mass, which could also be invalidated by the system 300.

With known urea quality sensors, the urea concentration values measured in these three examples would have been considered as representing concentrations of liquid urea, thereby possibly triggering erroneous and/or unnecessary adjustments of the SCR system, and even letting the SCR system use an at least partially frozen urea solution instead of the required liquid urea solution. However, with the present invention, the measured urea concentration values are recognized as falling outside of the physical range [%urea_min; %urea_max] corresponding to the liquid phase at the corresponding measure temperatures. Thus, the measurements can be invalidated, thereby preventing incorrect and/or unnecessary readjustment or use of the SCR system.

Thus, without being limited to this particular context, the present invention provides a solution at least for the above-mentioned technical problem in the particular case of urea solutions used in SCR systems of diesel engines, such as DEF or more in general urea solutions comprising deionized water. In particular, in some embodiments, the inventive method and/or system could be used for limiting the values of the measured concentration of urea in the urea solution that are output to a customer system. In further embodiments, a determination of invalid measured concentrations could be output, for instance to a customer system, in order to provide an indication that the concentration sensing means may be defective. In further embodiments, invalid measured concentrations could be indicative that foreign, possibly undesired, substances may be present in the urea solution.

Furthermore, as can also be taken from the description above, the present invention is not limited to the particular determination of the validity of a measured concentration of liquid urea in urea solutions used in SCR systems of diesel engines. More generally, the present invention provides a method and a system for determining the validity of a measured concentration of urea in a fluid, which can be used, for instance, close to the conditions leading to a change of phase, or even during a change of phase of the fluid in order to determine whether the fluid is in the physical phase in which the measured concentration of urea makes sense.

### List of reference signs

- 300: system
- 301: temperature sensor
- 302: concentration sensor
- 303: processing unit
- 304: customer system
- 400: urea solution phase diagram
- 401: liquid phase / valid measurement zone
- 402: solid phase / invalid measurement zone
- 403: phase boundary

## Claims

1. Method for determining the validity of a measured concentration of urea in a fluid, the method comprising:
measuring a temperature (101) of a fluid comprising urea; and
measuring a concentration (102) of urea in said fluid;
**characterized in that** the method further comprises:
after the step of measuring the temperature, determining an interval of validity (103) of a concentration of urea in said fluid for a given predetermined physical phase of the fluid at the measured temperature; and
determining (104) whether the measured concentration of urea falls in the determined interval of validity for said predetermined physical phase;
wherein the predetermined physical phase is the liquid phase;
wherein the fluid is a urea solution comprising deionized water, in particular diesel exhaust fluid (DEF);
wherein determining the interval of validity (103) comprises using a phase diagram (400) for said urea solution, comprising information regarding the concentration of urea at a given temperature in the solid and liquid phases;
wherein the phase diagram (400) comprises a phase boundary (403) representing where the transition between the liquid and solid phases of said urea solution occurs; and
wherein the interval of validity (103) is defined by a minimum and maximum urea concentration in the liquid phase determined by using the phase boundary (403) of the phase diagram (400) at a given temperature.

2. Method according to claim 1, further comprising, after determining (104) whether the measured concentration of urea falls in the determined interval of validity for said predetermined physical phase, classifying as invalid (204) a measured concentration of urea that was determined as not falling in the interval of validity, and/or classifying as valid (205) a measured concentration of urea that was determined as falling in the interval of validity.

3. Method according to any of the preceding claims, further comprising outputting the measured temperature and/or outputting the measured concentration of urea and/or, after determining (104) whether the measured concentration of urea falls in the determined interval of validity for said predetermined physical phase, outputting information representative of the validity or invalidity of the measured concentration of urea for the predetermined physical phase.

4. Method according to claim 3, wherein outputting information representative of the validity of the measured concentration of urea comprises information representative of an actual current physical phase of the fluid, in particular information as to whether the current physical phase of the fluid is the predetermined physical phase.

5. System (300) for determining the validity of a measured concentration of urea in a fluid, the system comprising:
temperature sensing means (301) arranged and configured for measuring a temperature of a fluid comprising urea, and further configured to output the measured temperature; and
concentration sensing means (302) arranged and configured for measuring a concentration of urea in said fluid, and further configured to output the measured concentration of urea;
**characterized in that** the system further comprises:
processing means (303) configured for reading the measured temperature output from the temperature sensing means (301), determining an interval of validity of a concentration of urea in said fluid for a given predetermined physical phase of the fluid at the measured temperature, and determining whether the measured concentration of urea output from the concentration sensing means (302) falls in the determined interval of validity for said predetermined physical phase;
wherein the processing means (303) is configured such that the predetermined physical phase is the liquid phase; and
wherein the fluid is a urea solution comprising deionized water, in particular diesel exhaust fluid (DEF);
the system further comprising storage means configured for storing phase diagram (400) information accessible by the processing means in respect of said urea solution, in particular wherein said phase diagram information comprises information regarding the concentration of urea at a given temperature in the solid and liquid phases of said urea solution, more in particular wherein said phase diagram information is stored as a look-up table and/or as a function;
wherein the phase diagram (400) comprises a phase boundary (403) representing where the transition between the liquid and solid phases of said urea solution occurs; and
wherein the processing means (303) is configured for defining the interval of validity by a minimum and maximum urea concentration in the liquid phase by using the phase boundary (403) of the phase diagram (400) at a given temperature.

6. System (300) according to claim 5, further comprising storage means configured for storing information accessible by the processing means (303) relative to the physical phase of the fluid according to temperature and concentration of urea in the fluid, in particular wherein the information is stored as a look-up table and/or as a function.

7. System (300) according to any of claims 5 or 6, wherein, based on a result of the determination by the processing means (303) of whether the measured concentration of urea falls in the determined interval of validity for said predetermined physical phase, the processing means (303) is further configured for classifying as invalid a measured concentration of urea that was determined as not falling in the interval of validity, and/or classifying as valid a measured concentration of urea that was determined as falling in the interval of validity.

8. System (300) according to any of claims 5 to 7, wherein the processing means (303) is further configured for outputting information representative of the validity or invalidity of the measured concentration of urea for the predetermined physical phase.

9. System (300) according to claim 8, wherein the information representative of the validity of the measured concentration of urea comprises information representative of an actual current physical phase of the fluid, in particular information as to whether an actual current physical phase of the fluid is the predetermined physical phase.

10. System (300) according to any of claims 5 to 9, wherein, based on a result of the determination by the processing means (303) of whether the measured concentration of urea falls in the determined interval of validity for said predetermined physical phase, the processing means (303) is further configured to output information for adjusting the concentration sensing means (302).

11. System (300) according to any of claims 5 to 10, wherein, based on a result of the determination by the processing means (303) of whether the measured concentration of urea falls in the determined interval of validity for said predetermined physical phase, the processing means (303) is further configured to output information relative to the nature and/or composition of the fluid.

12. System (300) according to any of claims 5 or 11, wherein the system is used in combination with a diesel engine, in particular in a Selective Catalytic Reduction (SCR) system of a diesel engine.

## Patentansprüche

1. Verfahren zum Bestimmen der Gültigkeit einer gemessenen Konzentration von Harnstoff in einem Fluid, wobei das Verfahren umfasst:
Messen einer Temperatur (101) eines Fluids umfassend Harnstoff; und
Messen einer Konzentration (102) von Harnstoff im Fluid;
**dadurch gekennzeichnet, dass** das Verfahren ferner umfasst:
nach dem Schritt zum Messen der Temperatur Bestimmen eines Gültigkeitsintervalls (103) einer Konzentration von Harnstoff im Fluid für eine bestimmte vorgegebene physikalische Phase des Fluids bei der gemessenen Temperatur; und
Bestimmen (104), ob die gemessene Konzentration von Harnstoff im bestimmten Gültigkeitsintervall für die vorgegebene physikalische Phase liegt;
wobei die vorgegebene physikalische Phase die flüssige Phase ist;
wobei das Fluid eine Harnstofflösung umfassend entionisiertes Wasser, insbesondere ein Dieselabgasfluid, ist;
wobei das Bestimmen des Gültigkeitsintervalls (103) das Verwenden eines Phasendiagramms (400) für die Harnstofflösung, umfassend Informationen in Bezug auf die Konzentration von Harnstoff bei einer bestimmten Temperatur in fester und flüssiger Phase, umfasst;
wobei das Phasendiagramm (400) eine Phasengrenze (403) darstellend, wo der Übergang zwischen flüssiger und fester Phase der Harnstofflösung erfolgt, umfasst; und
wobei das Gültigkeitsintervall (103) durch eine minimale und maximale Harnstoffkonzentration in der flüssigen Phase, bestimmt durch Verwenden der Phasengrenze (403) des Phasendiagramms (400) bei einer bestimmten Temperatur, definiert ist.

2. Verfahren nach Anspruch 1, ferner umfassend, nach dem Bestimmen (104), ob die gemessene Konzentration von Harnstoff im bestimmten Gültigkeitsintervall für die vorgegebene physikalische Phase liegt, das Klassifizieren einer gemessenen Konzentration von Harnstoff als ungültig (204), die als nicht im Gültigkeitsintervall liegend bestimmt wurde, und/oder das Klassifizieren einer gemessenen Konzentration von Harnstoff als gültig (205), die als im Gültigkeitsintervall liegend bestimmt wurde.

3. Verfahren nach einem der vorhergehenden Ansprüche, ferner umfassend das Ausgeben der gemessenen Temperatur und/oder das Ausgeben der gemessenen Konzentration von Harnstoff und/oder, nach dem Bestimmen (104), ob die gemessene Konzentration von Harnstoff im bestimmten Gültigkeitsintervall für die vorgegebene physikalische Phase liegt, das Ausgeben einer für die Gültigkeit oder Ungültigkeit der gemessenen Konzentration von Harnstoff für die vorgegebene physikalische Phase repräsentativen Information.

4. Verfahren nach Anspruch 3, wobei das Ausgeben einer für die Gültigkeit der gemessenen Konzentration von Harnstoff repräsentativen Information eine für eine tatsächliche aktuelle physikalische Phase des Fluids repräsentative Information, insbesondere eine Information, ob die aktuelle physikalische Phase des Fluids die vorgegebene physikalische Phase ist, umfasst.

5. System (300) zum Bestimmen der Gültigkeit einer gemessenen Konzentration von Harnstoff in einem Fluid, wobei das System umfasst:
ein zum Messen einer Temperatur eines Fluids umfassend Harnstoff angeordnetes und konfiguriertes und ferner zum Ausgeben der gemessenen Temperatur konfiguriertes Temperaturmessmittel (301); und
ein zum Messen einer Konzentration von Harnstoff im Fluid angeordnetes und konfiguriertes und ferner zum Ausgeben der gemessenen Konzentration von Harnstoff konfiguriertes Konzentrationsmessmittel (302);
**dadurch gekennzeichnet, dass** das System ferner umfasst:
ein zum Lesen der vom Temperaturmessmittel (301) ausgegebenen gemessenen Temperatur, Bestimmen eines Gültigkeitsintervalls einer Konzentration von Harnstoff im Fluid für eine bestimmte vorgegebene physikalische Phase des Fluids bei der gemessenen Temperatur und Bestimmen, ob die vom Konzentrationsmessmittel (302) ausgegebene gemessene Konzentration von Harnstoff im bestimmten Gültigkeitsintervall für die vorgegebene physikalische Phase liegt, konfiguriertes Verarbeitungsmittel (303);
wobei das Verarbeitungsmittel (303) so konfiguriert ist, dass die vorgegebene physikalische Phase die flüssige Phase ist; und
wobei das Fluid eine Harnstofflösung umfassend entionisiertes Wasser, insbesondere ein Dieselabgasfluid, ist;
wobei das System ferner ein zum Speichern einer für das Verarbeitungsmittel zugänglichen Information eines Phasendiagramms (400) in Bezug auf die Harnstofflösung konfiguriertes Speichermittel umfasst, wobei die Phasendiagramminformation insbesondere eine Information in Bezug auf die Konzentration von Harnstoff bei einer bestimmten Temperatur in fester und flüssiger Phase der Harnstofflösung, wobei die Phasendiagramminformation insbesondere als eine Nachschlagetabelle und/oder als eine Funktion gespeichert wird;
wobei das Phasendiagramm (400) eine Phasengrenze (403) darstellend, wo der Übergang zwischen flüssiger und fester Phase der Harnstofflösung erfolgt, umfasst; und
wobei das Verarbeitungsmittel (303) zum Definieren des Gültigkeitsintervalls durch eine minimale und maximale Harnstoffkonzentration in der flüssigen Phase durch Verwenden der Phasengrenze (403) des Phasendiagramms (400) bei einer bestimmten Temperatur konfiguriert ist.

6. System (300) nach Anspruch 5, ferner umfassend ein zum Speichern einer für das Verarbeitungsmittel (303) zugänglichen Information in Bezug auf die physikalische Phase des Fluids gemäß Temperatur und Konzentration von Harnstoff im Fluid konfiguriertes Speichermittel, wobei die Information insbesondere als eine Nachschlagetabelle und/oder als eine Funktion gespeichert wird.

7. System (300) nach Anspruch 5 oder 6, wobei auf der Basis eines Ergebnisses des Bestimmens durch das Verarbeitungsmittel (303), ob die gemessene Konzentration von Harnstoff im bestimmten Gültigkeitsintervall für die vorgegebene physikalische Phase liegt, das Verarbeitungsmittel (303) ferner zum Klassifizieren einer gemessenen Konzentration von Harnstoff als ungültig, die als nicht im Gültigkeitsintervall liegend bestimmt wurde, und/oder Klassifizieren einer gemessenen Konzentration von Harnstoff als gültig, die als im Gültigkeitsintervall liegend bestimmt wurde, konfiguriert ist.

8. System (300) nach einem der Ansprüche 5 bis 7, wobei das Verarbeitungsmittel (303) ferner zum Ausgeben einer für die Gültigkeit oder Ungültigkeit der gemessenen Konzentration von Harnstoff für die vorgegebene physikalische Phase repräsentativen Information konfiguriert ist.

9. System (300) nach Anspruch 8, wobei die für Gültigkeit der gemessenen Konzentration von Harnstoff repräsentative Information eine für eine tatsächliche aktuelle physikalische Phase des Fluids repräsentative Information, insbesondere eine Information, ob eine tatsächliche aktuelle physikalische Phase des Fluids die vorgegebene physikalische Phase ist, umfasst.

10. System (300) nach einem der Ansprüche 5 bis 9, wobei auf der Basis eines Ergebnisses des Bestimmens durch das Verarbeitungsmittel (303), ob die gemessene Konzentration von Harnstoff im vorgegebenen Gültigkeitsintervall für die vorgegebene physikalische Phase liegt, das Verarbeitungsmittel (303) ferner zum Ausgeben einer Information zum Anpassen des Konzentrationsmessmittels (302) konfiguriert ist.

11. System (300) nach einem der Ansprüche 5 bis 10, wobei auf der Basis eines Ergebnisses des Bestimmens durch das Verarbeitungsmittel (303), ob die gemessene Konzentration von Harnstoff im vorgegebenen Gültigkeitsintervall für die vorgegebene physikalische Phase liegt, das Verarbeitungsmittel (303) ferner zum Ausgeben einer Information in Bezug auf die Beschaffenheit und/oder Zusammensetzung des Fluids konfiguriert ist.

12. System (300) nach Anspruch 5 oder 11, wobei das System in Kombination mit einem Dieselmotor, insbesondere in einem Selective-Catalytic-Reduction-(SCR-)System eines Dieselmotors, verwendet wird.

## Revendications

1. Procédé de détermination de la validité d'une concentration d'urée mesurée dans un fluide, le procédé comprenant :
la mesure de la température (101) d'un fluide comprenant de l'urée ; et
la mesure de la concentration d'urée (102) dans ledit fluide ;
**caractérisé en ce que** le procédé comprend en outre :
après l'étape de mesure de la température, la détermination d'un intervalle de validité (103) de la concentration d'urée dans ledit fluide pour une phase physique prédéterminée donnée du fluide à la température mesurée ; et
la détermination (104) du fait que la concentration d'urée mesurée est comprise ou non dans l'intervalle de validité déterminé pour ladite phase physique prédéterminée ;
dans lequel la phase physique prédéterminée est la phase liquide ;
dans lequel le fluide est une solution d'urée comprenant de l'eau déminéralisée, en particulier un fluide d'échappement de moteur Diesel (DEF) ;
dans lequel la détermination de l'intervalle de validité (103) comprend l'utilisation d'un diagramme de phase (400) pour ladite solution d'urée, comprenant de l'information concernant la concentration d'urée à une température donnée dans les phases solide et liquide ;
dans lequel le diagramme de phase (400) comprend une délimitation de phase (403) indiquant où se produit la transition entre les phases liquide et solide de ladite solution d'urée ; et
dans lequel l'intervalle de validité (103) est défini par des concentrations d'urée minimale et maximale dans la phase liquide déterminée en utilisant la délimitation de phase (403) du diagramme de phase (400) à une température donnée.

2. Procédé selon la revendication 1, comprenant en outre, après la détermination (104) du fait que la concentration d'urée mesurée est comprise ou non dans l'intervalle de validité déterminé pour ladite phase physique prédéterminée, la classification d'une concentration d'urée mesurée qui a été déterminée comme non comprise dans l'intervalle de validité comme non valide (204), et/ou la classification d'une concentration d'urée mesurée qui a été déterminée comme comprise dans l'intervalle de validité comme valide (205).

3. Procédé selon l'une quelconque des revendications précédentes, comprenant en outre la sortie de la température mesurée et/ou la sortie de la concentration d'urée mesurée et/ou, après la détermination (104) du fait que la concentration d'urée mesurée est comprise ou non dans l'intervalle de validité déterminé pour ladite phase physique prédéterminée, la sortie d'information représentant la validité ou la non-validité de la concentration d'urée mesurée pour la phase physique prédéterminée.

4. Procédé selon la revendication 3, dans lequel la sortie d'information représentant la validité de la concentration d'urée mesurée comprend de l'information représentant une phase physique courante actuelle du fluide, en particulier de l'information concernant le fait que la phase physique courante du fluide est ou non la phase physique prédéterminée.

5. Système (300) de détermination de la validité d'une concentration d'urée mesurée dans un fluide, le système comprenant :
un moyen de détection de température (301) agencé et configuré pour mesurer la température d'un fluide comprenant de l'urée, et configuré en outre pour sortir la température mesurée ; et
un moyen de détection de concentration (302) agencé et configuré pour mesurer une concentration d'urée dans ledit fluide, et configuré en outre pour sortir la concentration d'urée mesurée ;
**caractérisé en ce que** le système comprend en outre :
un moyen de traitement (303) configuré pour lire la température mesurée sortie par le moyen de détection de température (301), pour déterminer un intervalle de validité d'une concentration d'urée dans ledit fluide pour une phase physique prédéterminée donnée du fluide à la température mesurée, et pour déterminer si la concentration d'urée mesurée sortie par le moyen de détection de concentration (302) est comprise ou non dans l'intervalle de validité déterminé pour ladite phase physique prédéterminée ;
dans lequel le moyen de traitement (303) est configuré de telle sorte que la phase physique prédéterminée est la phase liquide ; et
dans lequel le fluide est une solution d'urée comprenant de l'eau déminéralisée, en particulier un fluide d'échappement de moteur Diesel DEF (Diesel Exhaust Fluid) ;
le système comprenant en outre un moyen de stockage configuré pour stocker de l'information de diagramme de phase (400) à laquelle peut accéder le moyen de traitement relative à ladite solution d'urée, en particulier dans lequel ladite information de diagramme de phase comprend de l'information concernant la concentration d'urée à une température donnée dans les phases solide et liquide de ladite solution d'urée, et plus en particulier dans lequel ladite information de diagramme de phase est stockée sous forme d'une table de correspondance et/ou sous forme d'une fonction ;
dans lequel le diagramme de phase (400) comprend une délimitation de phase (403) indiquant où se produit la transition entre les phases liquide et solide de ladite solution d'urée ; et
dans lequel le moyen de traitement (303) est configuré pour définir l'intervalle de validité par des concentrations d'urée minimale et maximale dans la phase liquide en utilisant la délimitation de phase (403) du diagramme de phase (400) à une température donnée.

6. Système (300) selon la revendication 5, comprenant en outre un moyen de stockage configuré pour stocker de l'information à laquelle a accès le moyen de traitement (303) relative à la phase physique du fluide en fonction de la température et de la concentration d'urée dans le fluide, en particulier dans lequel l'information est stockée sous forme d'une table de correspondance et/ou sous forme d'une fonction.

7. Système (300) selon l'une quelconque des revendications 5 et 6, dans lequel, sur base du résultat de la détermination par le moyen de traitement (303) du fait que la concentration d'urée mesurée est comprise ou non dans l'intervalle de validité déterminé pour ladite phase physique prédéterminée, le moyen de traitement (303) est en outre configuré pour classifier une concentration d'urée mesurée qui a été déterminée comme non comprise dans l'intervalle de validité comme non valide, et/ou pour classifier une concentration d'urée mesurée qui a été déterminée comme comprise dans l'intervalle de validité comme valide.

8. Système (300) selon l'une quelconque des revendications 5 à 7, dans lequel le moyen de traitement (303) est en outre configuré pour sortir de l'information représentant la validité ou la non-validité de la concentration d'urée mesurée pour la phase physique prédéterminée.

9. Système (300) selon la revendication 8, dans lequel l'information représentant la validité de la concentration d'urée mesurée comprend de l'information représentant une phase physique courante actuelle du fluide, en particulier de l'information concernant le fait qu'une phase physique courante actuelle du fluide est ou non la phase physique prédéterminée.

10. Système (300) selon l'une quelconque des revendications 5 à 9 dans lequel, sur base du résultat de la détermination par le moyen de traitement (303) du fait que la concentration d'urée mesurée est comprise ou non dans l'intervalle de validité déterminé pour ladite phase physique prédéterminée, le moyen de traitement (303) est configuré en outre pour sortir de l'information destinée à réguler le moyen de détection de concentration (302).

11. Système (300) selon l'une quelconque des revendications 5 à 10 dans lequel, sur base du résultat de la détermination par le moyen de traitement (303) du fait que la concentration d'urée mesurée est comprise ou non dans l'intervalle de validité déterminé pour ladite phase physique prédéterminée, le moyen de traitement (303) est configuré en outre pour sortir de l'information relative à la nature et/ou à la composition du fluide.

12. Système (300) selon l'une quelconque des revendications 5 et 11, dans lequel le système est utilisé en combinaison avec un moteur Diesel, et en particulier avec un système de réduction catalytique sélective SCR (Selective Catalytic Reduction) d'un moteur Diesel.
